(19) Europäisches Patentamt

European Patent Office

Office européen des brevets

(11) **EP 1 162 446 A1**

(12) **EUROPÄISCHE PATENTANMELDUNG**

(43) Veröffentlichungstag:
   **12.12.2001 Patentblatt 2001/50**

(51) Int Cl.7: **G01N 13/02**

(21) Anmeldenummer: **01108476.1**

(22) Anmeldetag: **04.04.2001**

(84) Benannte Vertragsstaaten:
   **AT BE CH CY DE DK ES FI FR GB GR IE IT LI LU
   MC NL PT SE TR**
   Benannte Erstreckungsstaaten:
   **AL LT LV MK RO SI**

(30) Priorität: **08.06.2000 DE 10028520**

(71) Anmelder: **Fraunhofer-Gesellschaft zur
   Förderung der angewandten Forschung e.V.
   80636 München (DE)**

(72) Erfinder:
   • **Janocha, Bernd, Dr.
   75015 Paris (FR)**

   • **Renzow, Dieter
   71277 Rutesheim (DE)**
   • **Matheis, Jens
   70563 Stuttgart (DE)**
   • **Wang, Yan
   70569 Stuttgart (DE)**

(74) Vertreter: **Gagel, Roland, Dr.
   Patentanwalt Dr. Roland Gagel,
   Landsberger Strasse 480a
   81241 München (DE)**

(54) **Verfahren und Vorrichtung zur Bestimmung der Konzentration von oberflächenaktiven Substanzen in einer Flüssigkeit**

(57) Es wird ein Verfahren sowie eine Vorrichtung zur Bestimmung der Konzentration von oberflächenaktiven Substanzen in einer Flüssigkeit beschrieben, bei dem die Flüssigkeit (3) einem Behältnis (1) mit einer an einem Auslass (4) im Bodenbereich angeordneten Kapillare (2) zur Tropfenbildung zugeführt wird. Bei dem Verfahren wird ein konstantes Innenvolumen des Behältnisses (1) nur teilweise mit der Flüssigkeit (3) aufgefüllt und luftdicht verschlossen, so dass sich beim Austropfen der Flüssigkeit (3) eine zunehmende Druckdifferenz zwischen Innen- und Außenraum des Behältnisses (1) aufbaut. Die Anzahl der von der Kapillare (2) abreißenden Tropfen über ein vorgegebenes Zeitintervall oder die Zeit für das Abreißen einer vorgebbaren Anzahl von Tropfen wird gemessen, um aus dem gemessenen Wert durch Vergleich mit Referenzwerten die Konzentration zu bestimmen.

Das Verfahren und die zugehörige Vorrichtung lassen sich auf einfache Weise und sehr kostengünstig realisieren, ohne Einbußen in der Messgenauigkeit gegenüber bekannten Verfahren hinnehmen zu müssen.

Fig. 1

Printed by Jouve, 75001 PARIS (FR)

## Beschreibung

## Technisches Gebiet

Die vorliegende Erfindung betrifft ein Verfahren sowie eine Vorrichtung zur Bestimmung der Konzentration von oberflächenaktiven Substanzen in einer Flüssigkeit, wobei die Flüssigkeit einem Behältnis mit einer an einem Auslass im Bodenbereich des Behältnisses angeordneten Kapillare zur Tropfenbildung zugeführt wird und die Anzahl der von der Kapillare abreißenden Tropfen pro Zeitintervall erfasst und ausgewertet wird.

Oberflächenaktive Stoffe, wie beispielsweise Tenside, werden häufig Prozessbädern zugesetzt, um als Netzmittel, Glanzmittel, Emulgatoren, Schaumregulatoren oder ähnliches zu wirken. Kommt es während des Prozesses zu einem Verbrauch dieser oberflächenaktiven Stoffe, so kann eine automatische Überwachung der Konzentration der oberflächenaktiven Stoffe in der Flüssigkeit in Verbindung mit einer Nachdosierung zu einem verbesserten Prozessergebnis führen.

Bevorzugte Anwendungsgebiete sind hierbei die Konzentrationsüberwachung von Reinigern in Reinigungsbädern, von Reinigern in Entfettungsbädern, von Waschmitteln in Textilwaschmaschinen, von Netzmitteln in Galvanikbädern oder die Überwachung von Reinwasser-Spülbädern auf eingeschleppte Reiniger. Ein weiteres Anwendungsgebiet eröffnet sich im Bereich der Überwachung von Oberflächengewässern, von Abwasser und von Reinwasser mit oberflächenaktiven Verunreinigungen.

## Stand der Technik

Die bekannten Messmethoden zur Bestimmung der Konzentration von oberflächenaktiven Stoffen wie beispielsweise Tensiden in einer Flüssigkeit basieren auf der Messung der Oberflächenspannung der Flüssigkeit. Die Diffusion von Tensidmolekülen aus dem Inneren einer wässrigen Lösung an deren Oberfläche verursacht eine Erniedrigung der Oberflächenspannung. Die Zeit für die Einstellung eines Gleichgewichts hängt dabei hauptsächlich von der Konzentration und der Diffusionsgeschwindigkeit des Tensids in der Flüssigkeit ab. Die gemessene Oberflächenspannung einer neuen Oberfläche nimmt mit der Zeit ab, bis ein Sättigungswert erreicht ist. Dieser Vorgang dauert in der Regel einige Sekunden, kann aber auch im Bereich von Millisekunden oder Stunden liegen. Aus dem Verlauf der Oberflächenspannung-Zeit-Kurven lässt sich die Konzentration eines oder mehrerer Tenside durch Vergleich mit vorher durchgeführten Kalibrierungsmessungen bestimmen.

T. Müller-Kirschbaum et al., "Das On-line Tensiometer" SÖFW-Journal, Vol. 118, 427 - 434 (1992) beschreiben zur Messung dieser Oberflächenspannung ein sogenanntes Blasendrucktensiometer, bei dem zwei Kapillaren unterschiedlichen Durchmessers in die Messflüssigkeit hineinragen und mit einem definierten Luftstrom beaufschlagt werden. Das Messverfahren beruht auf der Veränderung des maximalen Blasendrucks der in der Flüssigkeit gebildeten Blasen. Taucht eine Kapillare in eine tensidhaltige Lösung und wird mit einem definierten Luftstrom beaufschlagt, so entweichen am unteren Ende Gasblasen. Der zur Blasenbildung erforderliche Druck in der Kapillare ist von der Oberflächenspannung und somit von der Tensidkonzentration in der Lösung abhängig. Bei dem vorgeschlagenen Verfahren wird der Differenzdruck zwischen den beiden Kapillaren unterschiedlichen Durchmessers elektronisch erfasst und zur Auswertung an einen Computer weitergeleitet.

In der DE 196 03 386 A1 sind ein Verfahren und eine Vorrichtung zur On-line-Messung der Oberflächenspannung von Tensidlösungen beschrieben, die ebenfalls ein Blasendrucktensiometer zur Messung einsetzen. Dieses Blasendrucktensiometer weist eine spezielle Messkammer auf, die es erlaubt, die Oberflächenspannung bei konstanter Blasengröße und damit bei einem definierten Oberflächenalter der Blase zu messen.

W. Krause et al., "Oberflächenspannungsmessung zur Prozessüberwachung", Laborpraxis Juni 1999, Vol. 23 (6), 36 - 41, beschreiben schließlich ein weiteres automatisiertes Blasendrucktensiometer, das in Zeitintervallen die dynamische Oberflächenspannung der Prozesslösung misst. Durch einen gesteuerten kontinuierlichen Anstieg der Fließrate des in die Kapillare eingeleiteten Gases erhöht sich die Frequenz der Blasenbildung, so dass sich damit verschiedene Blasenlebenszeiten erreichen lassen. Die Druckluftversorgung für die Beaufschlagung der Kapillare mit dem Gas muss hierfür entsprechend angesteuert werden. Der jeweils maximale Druck in der Gasblase wird über einen speziell dafür ausgestalteten Drucksensor gemessen. Die Auswertung erfolgt wiederum durch Vergleich der gemessenen Werte mit entsprechenden Referenzkurven.

In B. Janocha et al., "Prozesskontrolle für Galvanik- und Reinigungsbäder - automatisierte tensiometrische Tensidkonzentrationsbestimmung", Galvanotechnik, Vol. 88, 3265 - 3268 (1997) sowie in der DE 19646925 C1 sind schließlich ein auf dem Prinzip der Tropfenvolumentensiometrie beruhendes Verfahren sowie eine zugehörige Vorrichtung zur Bestimmung der Konzentration von oberflächenaktiven Substanzen in einer Flüssigkeit beschrieben. Bei dem Verfahren wird die Flüssigkeit einem Behältnis mit einer an einem Auslass im Bodenbereich angeordneten Kapillare zur Tropfenbildung zugeführt. Das Behältnis ist als Spritze mit einem beweglichen motorbetriebenen Kolben zur Veränderung des Innenvolumens ausgestattet. Der motorbetriebene Kolben wird mit konstanter Geschwindigkeit abwärts bewegt und die Anzahl der aus einem bestimmten Flüssigkeitsvolumen gebildeten Tropfen mit Hilfe einer Lichtschranke gemessen. Durch Variation der Bewegungsgeschwindigkeit des motorbetriebenen Kolbens und somit der Bildungsgeschwindigkeit der Tropfen werden unterschiedliche Tropfenlebensdauern gemessen. Als Ergebnis der Messung werden Tropfenvolumina in Abhängigkeit von der Tropfenbildungsgeschwindigkeit erhalten. Der Verlauf dieser Kurven ist charakteristisch für die Konzentration des Tensids. Durch Vergleich der gemessenen Kurven mit Referenzkurven kann auf diese Weise die Konzentration des Tensids in der Flüssigkeit bestimmt werden.

Alle genannten Techniken setzen tensiometrische Methoden zur Messung der dynamischen Oberflächenspannung ein, aus der dann durch einen Vergleich mit Kalibrierungskurven die Tensidkonzentration ermittelt wird. Die hierfür erforderlichen Vorrichtungen sind jedoch sehr aufwendig und damit entsprechend teuer. So ist einerseits im Falle der genannten Blasendrucktensiometer die genaue Einstellung bzw. Variation der in die Kapillaren eingebrachten Druckluft erforderlich. Andererseits wird im Falle des Tropfenvolumentensiometers ein beweglicher, motorbetriebener Kolben mit entsprechender Ansteuerelektronik zur Veränderung der Tropfenbildungsgeschwindigkeit benötigt.

Die Aufgabe der vorliegenden Erfindung besteht daher darin, ein Verfahren sowie eine Vorrichtung zur Bestimmung der Konzentration von oberflächenaktiven Substanzen in einer Flüssigkeit bereitzustellen, die eine einfache und kostengünstige Konzentrationsbestimmung bzw. Konzentrationsüberwachung der Flüssigkeit ermöglichen.

**Darstellung der Erfindung**

Die Aufgabe wird mit dem Verfahren und der Vorrichtung gemäß den Ansprüchen 1 bzw. 5 gelöst. Vorteilhafte Ausgestaltungen des Verfahrens sowie der zugehörigen Vorrichtung sind Gegenstand der Unteransprüche.

Bei dem erfindungsgemäßen Verfahren wird die Flüssigkeit in ein Behältnis mit einem konstanten, d. h. nicht variablem, Innenvolumen eingebracht, an dem an einem Auslass im Bodenbereich eine Kapillare zur Tropfenbildung angeordnet ist. Das konstante Innenvolumen des Behältnisses wird nicht vollständig, sondern nur teilweise mit der Flüssigkeit aufgefüllt und anschließend luftdicht verschlossen, so dass über der Flüssigkeit ein Luftvolumen verbleibt. Durch das luftdichte Verschließen und das konstante Innenvolumen bildet sich beim Austropfen der Flüssigkeit durch die Kapillare eine mit steigender Tropfenzahl zunehmende Druckdifferenz zwischen dem Innenvolumen bzw. Innenraum und dem Außenraum des Behältnisses. Durch diese Druckdifferenz zum Umgebungsdruck, der am Kapillaraustritt herrscht, verringert sich die Abtropfgeschwindigkeit kontinuierlich solange, bis die Tropfenbildung bzw. das Tropfen vollständig aufhört. Durch die Verlangsamung der Tropfgeschwindigkeit wird die Verweilzeit der Tropfen an der Kapillare größer und die oberflächenaktiven Substanzen können in einem größeren Ausmaß an der Tropfenoberfläche adsorbieren. Dadurch sinkt die Oberflächenspannung des Tropfens und er reißt mit einem gegenüber Wasser kleineren Volumen ab. Dieses Volumen ist stark von der Konzentration der oberflächenaktiven Substanzen abhängig. Bei dem Verfahren wird entweder die Anzahl der von der Kapillare abreißenden Tropfen über ein vorgebbares Zeitintervall oder die Zeit für das Abreißen einer vorgebbaren Anzahl von Tropfen gemessen und aus dem gemessenen Wert durch Vergleich mit Referenzwerten die aktuelle Konzentration der oberflächenaktiven Substanzen bestimmt.

Die Referenzwerte werden durch eine vorherige Kalibration des jeweils zu überwachenden Flüssigkeitssystems für verschiedene Konzentrationen der vorliegenden oberflächenaktiven Substanzen bereitgestellt. Bei dem vorliegenden Verfahren wird somit die integrierte Tropfenbildungszeit über ein vorgebbares oder sich aus einer vorgebbaren Tropfenanzahl ergebendes Zeitintervall gemessen und durch Vergleich mit den Kalibrierungsdaten die aktuelle Konzentration bestimmt. Aufgrund der sich ändernden Druckdifferenz zwischen Innen- und Außenraum des Behältnisses und der daraus resultierenden Veränderung der Tropfenbildungszeit während der Messung lassen sich mit dem Verfahren bzw. der zugehörigen Vorrichtung auch Tensidkonzentrationen unter- sowie oberhalb der kritischen Mizellbildungskonzentration (CMC) unterscheiden.

Hierbei kann die Konzentration einzelner oberflächenaktiver Substanzen oder die Gesamtkonzentration einer Mischung verschiedenster oberflächenaktiver Substanzen bestimmt werden.

Die erfindungsgemäße Vorrichtung zur Bestimmung der Konzentration von oberflächenaktiven Substanzen in einer Flüssigkeit weist ein Behältnis mit einem konstanten Innenvolumen und einer an einem ersten Auslass im Bodenbereich angeordneten Kapillare sowie einer Zuführung für die Flüssigkeit zum konstanten Innenvolumen auf. Desweiteren sind Mittel zum Zählen der von der Kapillare abreißenden Tropfen sowie zur Zeitmessung und eine Einrichtung zum luftdichten Verschließen des konstanten Innenvolumens des Behältnisses nach dem Zuführen der Flüssigkeit vorgesehen. Die Vorrichtung weist somit kein mechanisch bewegliches Element, wie z.B. einen Kolben, zur Variation des Innenvolumens auf, wie dies bei dem bekannten Tropfenvolumentensiometer der Fall ist.

Die für die dynamische Oberflächenspannungserfassung erforderliche Variation der Tropfenbildungszeit wird beim Verfahren bzw. der Vorrichtung der vorliegenden Erfindung nicht über eine äußere Steuerung einer dafür vorgesehenen Zusatzeinrichtung erreicht, sondern erfolgt automatisch ohne aufwendige Zusatzkonstruktionen durch das luftdichte Verschließen des Behältnisses nach dem nur teilweisen Einfüllen der Messflüssigkeit, wodurch sich die Druckdifferenz beim Austropfen und damit die Tropfenbildungszeit während der Messung automatisch verändern. Das vorliegende Verfahren bzw. die zugehörige Vorrichtung bieten gegenüber On-line-Tensiometern auf der Basis der Blasendruck- und der Tropfenvolumenmethode eine deutliche technische Vereinfachung ohne Verlust der Messgenauigkeit, da die konzentrationsabhängige Oberflächenaktivität der oberflächenaktiven Substanzen über eine stalagmometrische Relativmessung und nicht über eine direkte Oberflächenspannungsbestimmung erfolgt. Die Vorrichtung kommt dabei ohne während der Messung mechanisch zu bewegende Teile aus. An die für eine automatische Messung erforderliche elektronische Steuerung der Vorrichtung werden daher wesentlich geringere Anforderungen gestellt. Die Realisierung der Druckdifferenz erlaubt eine deutliche Erweiterung des Messbereiches gegenüber herkömmlichen isobaren Stalagmometern, deren Probenraum im Austausch mit der Umgebungsluft steht.

Das Verfahren bzw. die Vorrichtung ermöglichen in besonderer Weise die automatische und kontinuierliche Bestimmung der Konzentration von bekannten Tensiden bzw. anderen oberflächenaktiven Stoffen in technischen Bädern. Hierfür erfolgt die Zuführung der zu untersuchenden Flüssigkeit quasikontinuierlich über eine entsprechende Pumpe, die durch eine Steuereinheit angesteuert wird. Die Steuereinheit übernimmt auch das automatische Verschließen des Behältnisses nach dem teilweisen Auffüllen des Behältnisses mit der Flüssigkeit. Anschließend wird über ein entsprechendes Sensorsystem die Tropfenanzahl erfasst und einer Auswerteeinheit zugeleitet, die den Vergleich mit den entsprechenden Referenzwerten vornimmt. Nach Durchführung eines derartigen Messzyklus wird das Behältnis durch die Steuereinheit wieder geöffnet und erneut Messflüssigkeit für den nächsten Messzyklus zugeführt. Die Auswerteeinheit kann die jeweils ermittelten Konzentrationsdaten, gegebenenfalls mit einer zusätzlichen Zeitinformation, speichern und/oder an einem entsprechenden Anzeigegerät ausgeben. Weiterhin lassen sich mit diesen Werten selbstverständlich auch Zusatzeinrichtungen beispielsweise zur Zuführung weiterer oberflächenaktiver Stoffe in die Flüssigkeit ansteuern, um eine bestimmte Konzentration aufrecht zu erhalten, oder um einen vollständigen Austausch der Flüssigkeit herbeizuführen. Auf diese Weise lässt sich mit einfachen Mitteln eine Vorrichtung für die automatische und kontinuierliche Konzentrationsmessung oberflächenaktiver Substanzen bereitstellen.

Das luftdichte Verschließen des konstanten Innenvolumens des Behältnisses nach dem Einfüllen der Flüssigkeit erfolgt in Abhängigkeit von der Ausgestaltung des Behältnisses mit Zuführungen bzw. Öffnungen. Vorzugsweise weist das eingesetzte Behältnis lediglich den Auslass mit der Kapillare, eine Zuführung für die Flüssigkeit sowie einen weiteren Auslass zur Begrenzung der Füllhöhe der Flüssigkeit auf. Nach dem Auffüllen des Behältnisses bis zu dieser Füllhöhe müssen daher lediglich dieser Füllhöhen-Auslass über ein entsprechendes Ventil luftdicht geschlossen und die Pumpe für das Einfüllen der Flüssigkeit gestoppt werden. Die Pumpe dient hierbei gleichzeitig als luftdichte Sperre für die Zuführung. Weist das Behältnis an seinem oberen Ende eine weitere Öffnung auf, so wird diese mit einem entsprechenden Stopfen luftdicht verschlossen. Dieser Stopfen muss selbstverständlich während des gesamten Einsatzes der Vorrichtung an einer Messflüssigkeit auf dem Behältnis verbleiben. Wesentlich ist bei der vorliegenden Vorrichtung lediglich, dass sich die Druckverhältnisse im Innenraum bzw. Innenvolumen des Behältnisses während eines Messzyklus nur aufgrund des Austropfens der Messflüssigkeit verändern.

Die Erfassung der Tropfenanzahl der von der Kapillare abreißenden Tropfen erfolgt vorzugsweise über eine unterhalb der Austrittsöffnung der Kapillare angeordnete Lichtschranke, die beim Passieren eines Tropfens einen entsprechenden elektrischen Impuls auslöst und an die Steuer- und Auswerteeinheit als Zählimpuls weitergibt.

Zur Sicherstellung einer reproduzierbaren Tropfenbildung an der Austrittsöffnung der Kapillare weist diese vorzugsweise ein Austrittsendstück aus hydrophobem Material auf oder ist mit einem Aufsatz aus hydrophobem Material überzogen. Ein derartiger Aufsatz kann beispielsweise durch einen Schlauch aus hydrophobem Material realisiert werden. Die Kapillare selbst ist an ihrem oberen Ende vorzugsweise aus einem metallischen Material gebildet. Das hydrophobe Material kann beispielsweise ein Kunststoff sein. Insbesondere eignen sich Materialien aus perfluoriertem Kunststoff, wie beispielsweise PTFE, PFA oder FEP.

Es versteht sich von selbst, dass die Austrittsöffnung der Kapillare einen geeigneten Durchmesser aufweisen muss, um die Tropfenbildung bei dem jeweiligen Flüssigkeitssystem zu ermöglichen. Dem Fachmann ist jedoch eine jeweils geeignete Dimensionierung hierfür bekannt.

Die vorliegende Vorrichtung sowie das zugehörige Verfahren werden nachfolgend ohne Beschränkung des allgemeinen Erfindungsgedankens anhand von Ausführungsbeispielen in Verbindung mit den Zeichnungen nochmals kurz erläutert. Hierbei zeigen:

Figur 1      schematisch ein Beispiel für die Ausgestaltung einer erfindungsgemäßen Vorrichtung;

Figur 2      ein erstes Beispiel einer Auftragung der integralen Tropfenbildungszeit gegen die Tropfenanzahl einer Messflüssigkeit;

Figur 3      ein Beispiel für die Tropfenanzahl in Abhängigkeit von der Konzentration der Messflüssigkeit aus Figur 2;

Figur 4      ein zweites Beispiel der Auftragung der integralen Tropfenbildungszeit einer Messflüssigkeit gegen die Tropfenanzahl;

Figur 5      ein Beispiel für die Tropfenanzahl in Abhängigkeit von der Konzentration der Messflüssigkeit aus Figur 4;

Figur 6      ein drittes Beispiel der Auftragung der integralen Tropfenbildungszeit einer Messflüssigkeit gegen die Tropfenanzahl; und

Figur 7      ein Beispiel für die Tropfenanzahl in Abhängigkeit von der Konzentration der Messflüssigkeit aus Figur 6.

## Wege zur Ausführung der Erfindung

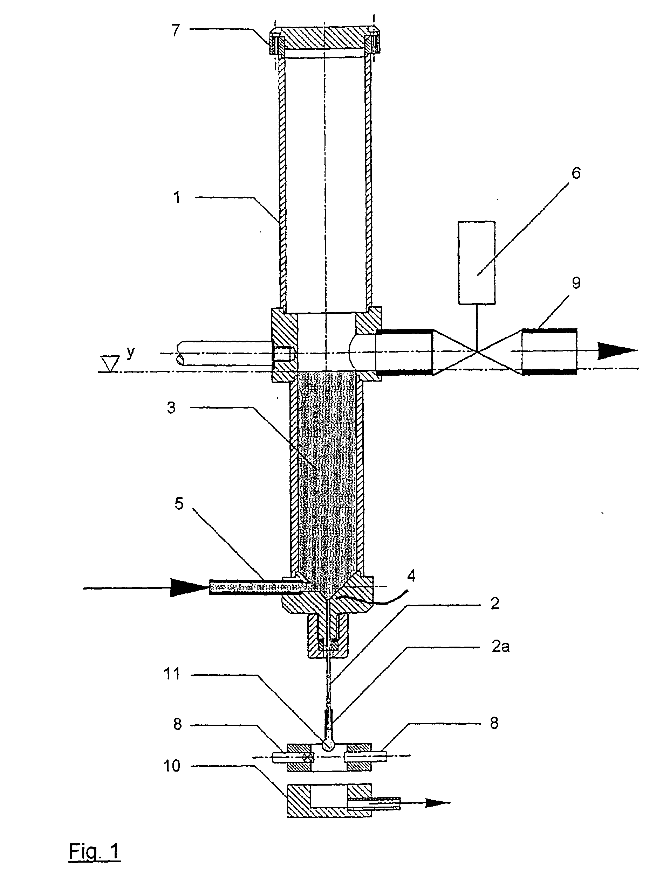

Figur 1 zeigt schematisch ein Beispiel für eine mögliche Ausführung der erfindungsgemäßen Vorrichtung. Das dargestellte Gerät besteht aus dem zylinderförmigen Behältnis 1, das im Bodenbereich einen Auslass 4 mit einer daran angeordneten Kapillare 2 aufweist. Der Zylinder 1 kann über einen Zufluss 5 bis zum Niveau y mit der Messflüssigkeit 3 aufgefüllt werden. Bei kontinuierlichem Zulauf kann die Flüssigkeit 3 über den in einem mittleren Bereich des Zylinders 1 vorgesehenen Auslass 9 abfließen. Auf diese Weise wird ständig die gleiche Füllhöhe y des Zylinders 1 sichergestellt. Der Abfluss 9 ist mit einem Magnetventil 6 luftdicht verschließbar. Der im oberen Bereich offene Zylinder 1 ist weiterhin mit einem entsprechenden luftdicht abschließenden Deckel 7 verschließbar. Durch den über die Füllhöhe y eingestellten hydrostatischen Druck tropft die Messflüssigkeit 3 durch die am unteren Ende des Zylinders 1 angeordnete Edelstahlkapillare 2. Zur Erzielung einer reproduzierbaren Tropfenbildung ist die Kapillare 2 an ihrem Austrittsendstück mit einem Kunststoffmantel 2a überzogen, der aus einem hydrophoben Material wie perfluoriertem Kunststoff besteht. Die Anzahl der abfallenden Tropfen 11 der Messflüssigkeit 3 wird mit einer unterhalb der Austrittsöffnung der Kapillare 2 angeordneten Lichtschranke 8 erfasst. Die von der Lichtschranke 8 erzeugten elektrischen Impulse werden an eine nicht dargestellte Steuer- und Auswerteeinheit weitergeleitet. Die Tropfen 11 fallen in einen Auffangbehälter 10, der einen Ausfluss zum Reservoir der Messflüssigkeit hat.

Gegenüber dem klassischen Stalagmometer, dessen Austropfgeschwindigkeit konstant ist, da sein Innenvolumen im Druckausgleich mit der Umgebung steht, verlangsamt sich bei der vorliegenden Vorrichtung, im Folgenden auch als Druckdifferenz-Stalagmometer bezeichnet, die Austropfgeschwindigkeit zunehmend, was die Unterscheidung von Tensidkonzentrationen unter- sowie oberhalb der kritischen Mizellbildungskonzentration ermöglicht. Nach dem teilweisen Auffüllen des Zylinders 1 mit der Messflüssigkeit 3 bis zur Füllhöhe y herrscht bei der vorliegenden Anordnung zunächst im Inneren des Zylinders 1, das heißt im Bereich oberhalb des Füllniveaus y, ein Luftdruck, der dem Umgebungsdruck außerhalb des Zylinders 1 entspricht.

Durch den durch die Flüssigkeitssäule 3 im Zylinder 1 gebildeten hydrostatischen Druck an der Austrittsöffnung der Kapillare 2 beginnt das Austropfen der Messflüssigkeit 3 aus dem Druckdifferenz-Stalagmometer. Mit zunehmendem Austropfen verringert sich jedoch der Luftdruck in dem nicht flüssigkeitsgefüllten oberen Teil des Zylinders 1, da dieser luftdicht verschlossen ist. Durch diese Druckdifferenz zum Umgebungsdruck, der an der Austrittsöffnung der Kapillare 2 anliegt, verringert sich die Abtropfgeschwindigkeit mit zunehmender Tropfenzahl kontinuierlich soweit, bis das Tropfen schließlich gänzlich aufhört.

Die zu untersuchende Messflüssigkeit 3 wird von dem zu untersuchenden Bad durch die in Figur 1 dargestellte Apparatur und wieder zurück in das Bad gepumpt. Ein Teil der Messflüssigkeit 3 tropft dabei durch die Kapillare 2 und wird über den Auffangbehälter 10 wieder zurück in das Bad geleitet. Am Beginn eines Messvorganges bzw. Messzyklus - nach dem teilweisen Auffüllen des Zylinders 1 - wird die nicht dargestellte Zulaufpumpe ausgeschaltet und das Magnetventil 6 am Abfluss 9 geschlossen. Ab diesem Zeitpunkt lösen die aus der Kapillare heraustropfenden Tropfen 11 beim Passieren der Lichtschranke 8 Impulse in der Steuereinheit aus. Die Anzahl der Tropfen wird gezählt, und die Zeit zwischen zwei von der Kapillare 2 abreißenden Tropfen 11 wird gemessen. Die jeweiligen Zeiten zwischen dem Abreißen zweier Tropfen werden zu einer Gesamtzeit, der integralen Tropfenbildungszeit, addiert. Dies entspricht einer Messung der Gesamttropfenlebensdauer seit Beginn des Messvorganges. Bei einer vorher bestimmten Tropfenanzahl, die von dem jeweiligen Tensidsystem abhängt, wird die Messung beendet.

Das Gerät der Figur 1 wird von einem Mikrocontroller beispielsweise eines PCs als Steuer- und Auswerteeinheit gesteuert. Die Steuereinheit übernimmt die Ablaufsteuerung, indem sie in vorgegebenen Intervallen die Pumpe und das Abflussventil 6 schaltet, und die Messwerterfassung, indem sie das Messsignal von der Lichtschranke registriert, die Zeit zwischen zwei Tropfen bestimmt und aufaddiert. Nach Beendigung der Messung wird die integrale Tropfenbildungszeit in der Steuer- und Auswerteeinheit mit einer Kalibration verglichen und auf diese Weise die gesuchte Konzentration ermittelt. Der Konzentrationswert wird angezeigt und gleichzeitig mit Datum und Uhrzeit in einem Speicher abgelegt.

Die folgenden Figuren zeigen Beispiele für Messsignale anhand von drei unterschiedlichen vermessenen Flüssigkeitssystemen. Zur Konzentrationsbestimmung wird der Zusammenhang zwischen der integralen Tropfenbildungszeit und der Tropfenanzahl verwendet. Zur Auswertung wird den Messpunkten in dieser Auftragung eine Kurve angepasst, anhand derer sich bei der Messung aus der integralen Tropfenbildungszeit einer Lösung mit unbekannter Tensidkonzentration die Konzentration berechnen lässt. Die Vorrichtung der Figur 1 wurde hierfür mit einer Kapillare 2 mit einem Innendurchmesser von 0,51 mm eingesetzt.

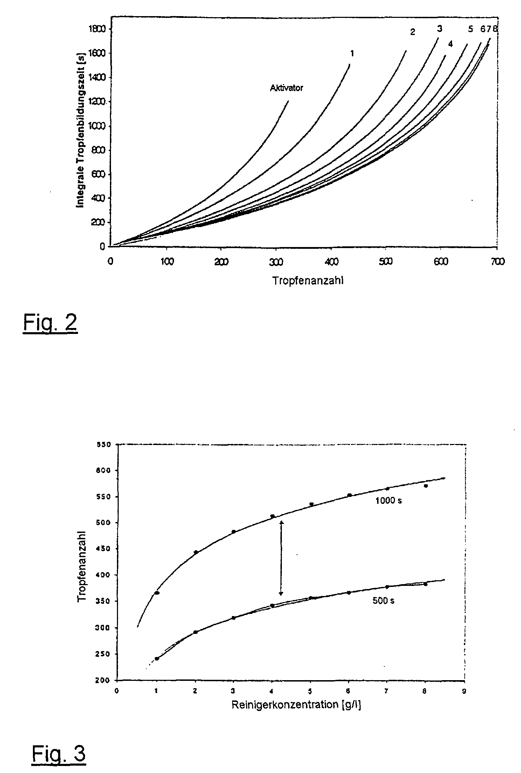

Figur 2 zeigt als erstes Beispiel die Auftragung der integralen Tropfenbildungszeit gegen die Tropfenanzahl des Industriereinigers "Ridoline C1318" der Firma Henkel. Die Konzentration der Reinigerkomponente wurde im Bereich von 1,0 - 8,0 g/l variiert. Die Konzentration der Aktivatorkomponente lag konstant bei 0,42 g/l. Die Abhängigkeit der integralen Tropfenbildungszeit dieses Flüssigkeitssystems bei konstanter Tropfenanzahl bzw. der Tropfenanzahl bei konstanter integraler Tropfenbildungszeit von der Konzentration der Reinigerkomponente ist aus der Figur deutlich ersichtlich. So kann bei einer vorgegebenen Messzeit von 1000 s (entsprechend einer integralen Tropfenbildungszeit von 1000 s) bei Messung einer Tropfenanzahl im Bereich von 350 auf eine Konzentration der Reinigerkomponente von etwa 1 g/l geschlossen werden. Ebenso lässt sich eine bestimmte Tropfenanzahl von beispielsweise 400 für die Messung vorgeben und aus der gemessenen integralen Tropfenbildungszeit die Konzentration durch Vergleich mit einer derartigen Referenzkurve bzw. entsprechenden Referenzwerten ableiten.

Figur 3 zeigt diesen Zusammenhang nochmals als Tropfenanzahl n in Abhängigkeit von der Konzentration c von "Ridoline C1318" für integrale Tropfenbildungszeiten von 500 und 1000 s. Die in der Figur dargestellte Kurvenanpassung wurde durch folgende Gleichungen vorgenommen:

$$\text{für 500 s: } c = 68{,}931 \times \log(n) + 243{,}13$$

$$\text{für 1000 s: } c = 100{,}70 \times \log(n) + 370{,}39$$

Bei einem vorgegebenen Zeitraum für die Messung von 500 s oder 1000 s lassen sich somit aus der gemessenen Tropfenanzahl sehr genau die jeweiligen Konzentrationen bestimmen. Es versteht sich von selbst, dass die vorgebbaren Werte für den Zeitraum bzw. für die Tropfenanzahl dem jeweiligen Messsystem derart angepasst werden, dass die Konzentration mit hoher Genauigkeit bestimmt werden kann. Die jeweiligen Messintervalle lassen sich aus den vorher durchgeführten Kalibrierungsmessungen und dem zu erwartenden Konzentrationsbereich sehr gut ableiten.

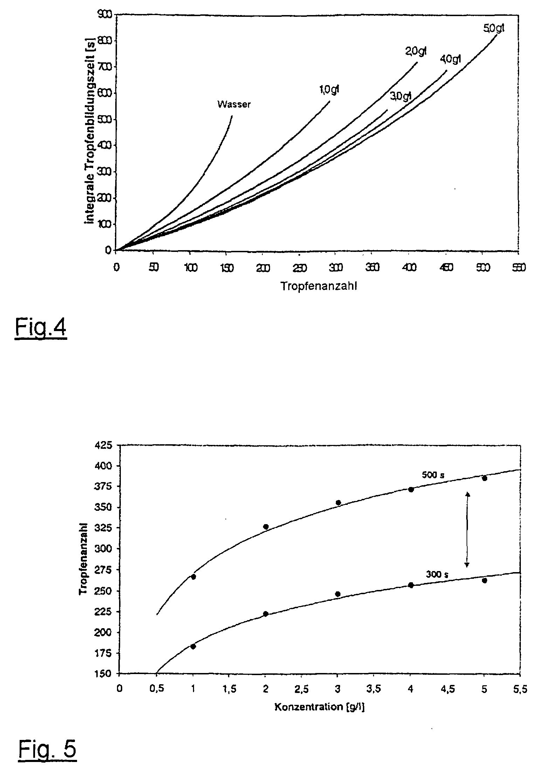

Ein weiteres Beispiel für die Auftragung der integralen Tropfenbildungszeit gegen die Tropfenzahl ist anhand des Haushaltswaschmittels "Persil" der Firma Henkel in Figur 4 dargestellt. Hierbei wurde die Konzentration des Waschmittels im Bereich von 1,0 bis 5,0 g/l variiert. In der Figur sind die jeweiligen Referenzkurven für diese Konzentrationen sowie für reines Wasser dargestellt. Im Übrigen gelten die gleichen Ausführungen, wie sie bereits im Zusammenhang mit Figur 2 dargelegt wurden.

Figur 5 zeigt wiederum die Auftragung der Tropfenanzahl in Abhängigkeit von der Konzentration c von "Persil" für integrale Tropfenbildungszeiten von 300 und 500 s. Die Kurvenanpassung erfolgte

$$\text{für 300 s mit: } c = 50{,}97 \times \log(n) + 185{,}80$$

und

$$\text{für 500 s mit: } c = 73{,}18 \times \log(n) + 271{,}13.$$

Die für eine bestimmte Anwendung erforderliche Sollkonzentration, in dieser Figur wie auch in der Figur 3 mit einem Pfeil dargestellt, kann mit einer derartigen Messung sehr gut überwacht werden.

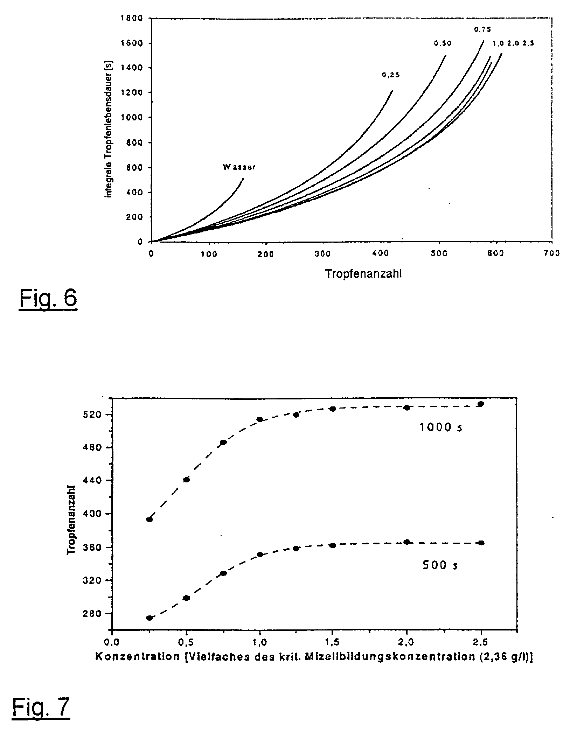

Figur 6 zeigt schließlich ein drittes Beispiel einer Auftragung der integralen Tropfenbildungszeit gegen die Tropfenanzahl für das Tensid Natriumdodecylsulfat für Konzentrationen unterhalb und oberhalb der kritischen Mizellbildungskonzentration, die bei diesem System bei 2,36 g/l liegt. Als Vergleich ist die Kurve von reinem Wasser ebenfalls in dem Diagramm dargestellt.

Figur 7 zeigt schließlich wiederum die Tropfenanzahl n in Abhängigkeit von der Konzentration c von Natriumdodecylsulfat für zwei feste integrale Tropfenbildungszeiten von 500 und 1000 s. Hierbei wurde eine sigmoidale Kurvenanpassung für 500 s mit

$$c = \frac{-110{,}01}{1 + \exp \dfrac{n - 0{,}588}{0{,}217}} + 394{,}91$$

und für 1000 s mit

$$c = \frac{-190{,}96}{1 + \exp \dfrac{n - 0{,}459}{0{,}238}} + 529{,}92$$

durchgeführt. Die untere Skala dieses Diagramms gibt hierbei nicht die absolute Konzentration, sondern die Konzentration als Vielfaches der kritischen Mizellbildungskonzentration an. Oberhalb des Faktors 1,5 - d.h. der anderthalbfachen kritischen Mizellbildungskonzentration - ändert sich die Tropfenanzahl in Abhängigkeit von der Konzentration nicht mehr. Aus dem Diagramm ist deutlich zu erkennen, dass sich die Konzentrationen umso besser unterscheiden lassen, je kleiner sie sind.

**Bezugszeichenliste**

1 Behältnis bzw. Zylinder
2 Kapillare
2a Aufsatz
3 Flüssigkeit

4    Auslass
5    Zuführung
6    Ventil
7    Deckel
8    Lichtschranke
9    Auslass
10   Auffangbehälter
11   Tropfen

**Patentansprüche**

1.  Verfahren zur Bestimmung der Konzentration von oberflächenaktiven Substanzen in einer Flüssigkeit, bei dem die Flüssigkeit (3) einem Behältnis (1) mit einer an einem Auslass (4) im Bodenbereich angeordneten Kapillare (2) zur Tropfenbildung zugeführt wird,
    **dadurch gekennzeichnet,**
    **dass** ein konstantes Innenvolumen des Behältnisses (1) nur teilweise mit der Flüssigkeit (3) aufgefüllt und luftdicht verschlossen wird, so dass sich beim Austropfen der Flüssigkeit (3) durch die Kapillare (2) eine zunehmende Druckdifferenz zwischen dem konstanten Innenvolumen und dem Außenraum des Behältnisses (1) aufbaut, die Anzahl der von der Kapillare (2) abreißenden Tropfen über ein vorgebbares Zeitintervall oder die Zeit für das Abreißen einer vorgebbaren Anzahl von Tropfen gemessen wird, und aus dem gemessenen Wert durch Vergleich mit Referenzwerten die Konzentration bestimmt wird.

2.  Verfahren nach Anspruch 1,
    **dadurch gekennzeichnet,**
    **dass** eine Kapillare (2) mit einem Austrittsendstück oder einem Aufsatz (2a) für das Austrittsendstück aus hydrophobem Material eingesetzt wird.

3.  Verfahren nach Anspruch 1 oder 2,
    **dadurch gekennzeichnet,**
    **dass** das luftdichte Verschließen des konstanten Innenvolumens des Behältnisses (1) durch Ansteuerung eines oder mehrerer Ventile (6) erfolgt, die eine Verbindung (9) zwischen dem Innenvolumen und dem Außenraum des Behältnisses (1) öffnen oder schließen.

4.  Verfahren nach einem der Ansprüche 1 bis 3,
    **dadurch gekennzeichnet,**
    **dass** die Anzahl der von der Kapillare (2) abreißenden Tropfen mit einer Lichtschranke (8) erfasst wird.

5.  Vorrichtung zur Bestimmung der Konzentration von oberflächenaktiven Substanzen in einer Flüssigkeit, mit

-   einem Behältnis (1) mit einem konstanten Innenvolumen und einer an einem ersten Auslass (4) im Bodenbereich angeordneten Kapillare (2),
-   einer Zuführung (5) für die Flüssigkeit (3) zum konstanten Innenvolumen des Behältnisses (1), und
-   Mitteln (8) zum Zählen der von der Kapillare (2) abreißenden Tropfen sowie zum Messen der Zeit für das Abreißen der Tropfen,

    **dadurch gekennzeichnet,**
    **dass** eine Einrichtung (6, 7) zum luftdichten Verschließen des konstanten Innenvolumens des Behältnisses (1) nach dem Zuführen der Flüssigkeit (3) vorgesehen ist.

6.  Vorrichtung nach Anspruch 5,
    **dadurch gekennzeichnet,**
    **dass** zumindest das Austrittsendstück der Kapillare (2) aus hydrophobem Material besteht.

7.  Vorrichtung nach Anspruch 5,
    **dadurch gekennzeichnet,**
    **dass** das Austrittsendstück der Kapillare (2) mit einem Aufsatz (2a) aus hydrophobem Material überzogen ist.

8.  Vorrichtung nach einem der Ansprüche 5 bis 7,
    **dadurch gekennzeichnet,**
    **dass** die Einrichtung (6, 7) zum luftdichten Verschließen zumindest ein Ventil (6) an einem zweiten Auslass (9) des Behältnisses (1) umfasst.

9.  Vorrichtung nach Anspruch 8,
    **dadurch gekennzeichnet,**
    **dass** die Zuführung (5) für die Flüssigkeit (3) in einem unteren Bereich und der zweite Auslass (9) in einem mittleren Bereich des Behältnisses (1) angeordnet sind.

10. Vorrichtung nach einem der Ansprüche 5 bis 9,
    **dadurch gekennzeichnet,**
    **dass** die Mittel (8) zum Zählen der von der Kapillare (2) abreißenden Tropfen durch eine unterhalb des Austrittsendstückes der Kapillare (2) angeordnete Lichtschranke gebildet werden.

11. Vorrichtung nach einem der Ansprüche 5 bis 10, **dadurch gekennzeichnet,**
    **dass** eine Steuer- und Auswerteeinheit vorgesehen ist, die mit den Mitteln zum Zählen der von der Kapillare (2) abreißenden Tropfen verbunden ist, die Anzahl der von der Kapillare (2) abreißenden Tropfen über ein vorgegebenes Zeitintervall oder die Zeit für das Abreißen einer vorgegebene Anzahl von Tropfen erfasst, und aus dem gemessenen Wert durch Vergleich mit Referenzwerten die Konzentration bestimmt und ausgibt und/oder speichert.

12. Vorrichtung nach Anspruch 11,
    **dadurch gekennzeichnet,**
    **dass** die Steuer- und Auswerteeinheit derart ausgebildet ist, dass sie eine Pumpe für die Zuführung der Flüssigkeit (3) und das Ventil (6) zum luftdichten Verschließen des Innenvolumens des Behältnisses (1) zur quasikontinuierlichen Messung angesteuert.

13. Verwendung einer Vorrichtung nach einem der vorangehenden Ansprüche zur automatischen on-line Konzentrationsüberwachung von Reinigern in Reinigungs- und Entfettungsbädern sowie in Reinwasser-Spülbädern, von Netzmitteln in Galvanikbädern, von Waschmitteln in Wäschewaschmaschinen oder von oberflächenaktiven Stoffen in Oberflächengewässern, Abwässern oder Reinwasser.

Fig. 1

Fig. 2

Fig. 3

Fig.4

Fig. 5

Fig. 6

Fig. 7

**Europäisches Patentamt**

## EUROPÄISCHER RECHERCHENBERICHT

Nummer der Anmeldung

EP 01 10 8476

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 843 170 A (FRAUNHOFER GES FORSCHUNG) 20. Mai 1998 (1998-05-20) * Spalte 6, Zeile 9 - Spalte 8, Zeile 23; Abbildungen 7,9 * | 1-8, 10-13 | G01N13/02 |
| D | & DE 196 46 925 C 16. Juli 1998 (1998-07-16) --- | | |
| X | MILLER R ET AL: "Ein automatisches Tropfenvolumentensiometer zur Messung von Oberflächen- und Grenzflächenspannungen" SOFW-JOURNAL SEIFEN, OELE, FETTE, WACHSE, VERLAG FUR CHEMISCHE INDUSTRIE, H. ZIOLKOWSKY K.G. AUGSBURG, DE, Bd. 118, 1. Juli 1992 (1992-07-01), Seiten 435-441, XP002092431 ISSN: 0942-7694 * Seite 435 - Seite 436; Abbildung 3 * | 1,2,4-7, 10-12 | |
| X | * Seite 441 * --- | 13 | |
| X | GUNDE ROK ET AL: "Surface tension of wastewater samples measured by the drop volume method" ENVIRONMENTAL SCIENCE AND TECHNOLOGY, AMERICAN CHEMICAL SOCIETY. EASTON, PA, US, Bd. 26, Nr. 5, 1. Mai 1992 (1992-05-01), Seiten 1036-1040, XP002092432 ISSN: 0013-936X * Seite 1036 - Seite 1038; Abbildung 1 * | 1,2,4-7, 10-12 | **RECHERCHIERTE SACHGEBIETE (Int.Cl.7)** G01N |
| A | * Seite 1036 - Seite 1038 * --- | 1 | |
| A | DE 21 04 885 A (TELDEC TELEFUNKEN DECCA) 24. August 1972 (1972-08-24) * das ganze Dokument * --- | 1-13 | |
| A | DE 31 25 864 A (BAYER AG) 20. Januar 1983 (1983-01-20) * Seite 7, Zeile 8 - Seite 9, Zeile 8; Abbildung 1 * ----- | 1-13 | |

Der vorliegende Recherchenbericht wurde für alle Patentansprüche erstellt

| Recherchenort | Abschlußdatum der Recherche | Prüfer |
|---|---|---|
| MÜNCHEN | 8. August 2001 | Purdie, D |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 10 8476

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-08-2001

| Im Recherchenbericht angeführtes Patentdokument | | Datum der Veröffentlichung | Mitglied(er) der Patentfamilie | Datum der Veröffentlichung |
|---|---|---|---|---|
| EP 0843170 | A | 20-05-1998 | DE 19646925 C | 16-07-1998 |
| DE 2104885 | A | 24-08-1972 | KEINE | |
| DE 3125864 | A | 20-01-1983 | KEINE | |

EPO FORM P0461

Für nähere Einzelheiten zu diesem Anhang : siehe Amtsblatt des Europäischen Patentamts, Nr.12/82